**Europäisches Patentamt**

**European Patent Office**

**Office européen des brevets**

(19)

(11) Veröffentlichungsnummer: **0 206 171**
A2

# (12) EUROPÄISCHE PATENTANMELDUNG

(21) Anmeldenummer: **86108113.1**

(22) Anmeldetag: **13.06.86**

(51) Int. Cl.⁴: **F 24 F 3/16, F 24 F 6/06**

(30) Priorität: **26.06.85 DE 3522882**

(43) Veröffentlichungstag der Anmeldung: **30.12.86**
**Patentblatt 86/52**

(84) Benannte Vertragsstaaten: **AT BE CH DE FR GB IT LI LU NL SE**

(71) Anmelder: **Eltex-Elektrostatik GmbH, Postfach 1229 Neudorfer Strasse 5, D-7858 Weil am Rhein (DE)**

(72) Erfinder: **Hahne, Ernst A., Ob. Rosenbergweg 25, CH-4123 Allschwil (CH)**
Erfinder: **Künzig, Hermann, Schwarzwaldstrasse 6, D-7858 Weil am Rhein 4 (DE)**

(74) Vertreter: **Säger, Manfred, Dipl.-Ing. et al, Patentanwälte Dipl.-Ing. Otto Flügel Dipl.-Ing. Manfred Säger Postfach 810540, D-8000 München 81 (DE)**

(54) **Luftbefeuchter.**

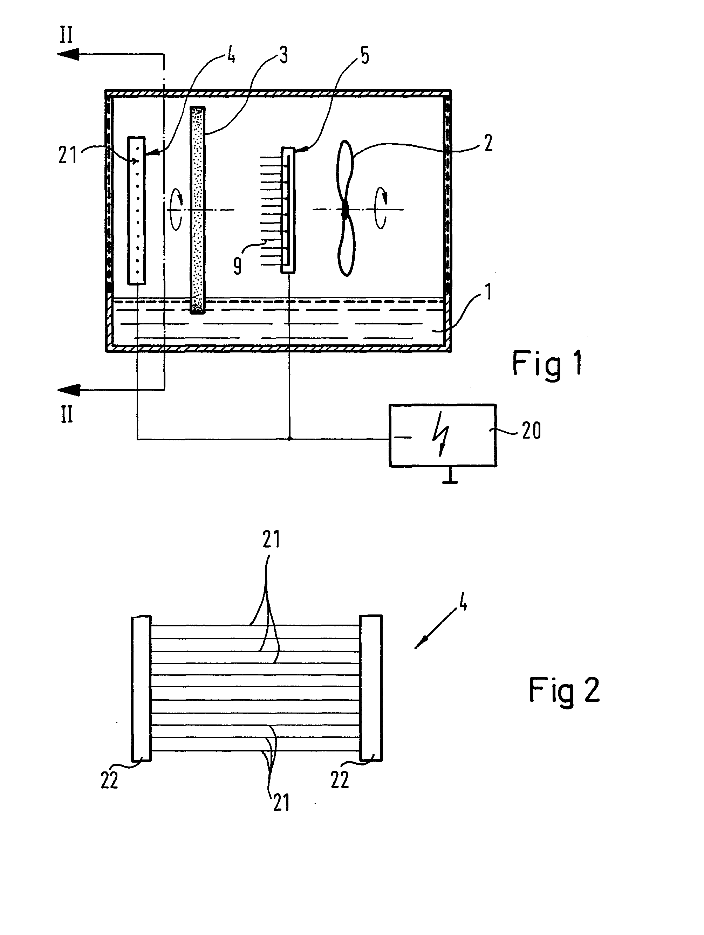

(57) Der Luftbefeuchter weist ein Gebläse 2 auf, dessen von ihm erzeugter Luftstrom durch eine Platte 3 mit einem luft-durchlässigen und feuchtigkeitsabgebenden Medium zwecks Luftbefeuchtung hindurchgeblasen wird. Hierbei sind vor und hinter der Platte 3 je eine elektrostatisch negativ aufgeladene Hochspannungselektrode 3, 4 angeordnet (Fig.1).

Die Erfindung betrifft einen Luftbefeuchter gemäß dem Oberbegriff des Hauptanspruchs.

Ein solcher Luftbefeuchter ist bekannt. Hierbei ist eine sich permanent drehende, teilweise in eine Wanne mit Wasser eingreifende Platte bekannt, die mit einem feuchtigkeitsabgebenden Medium versehen ist sowie durchlässig für Luft ist. Im Betrieb wird dann der von dem Gebläse erzeugte Luftstrom durch die Platte hindurchgeblasen, wodurch die Luft befeuchtet wird.

Solche Luftbefeuchter haben sich im großen und ganzen bewährt.

Der Erfindung liegt die Aufgabe zugrunde, einen gattungsgemäßen Luftbefeucher so weiterzubilden, daß feuchte Luft ionisiert werden kann, ohne daß hierbei starke Ozonkonzentrationen entstehen.

Diese Aufgabe wird bei einem gattungsgemäßen Luftbefeuchter gemäß dem Oberbegriff des Hauptanspruchs erfindungsgemäß durch dessen kennzeichnende Merkmale gelöst.

Infolge der zwei, vorzugsweise verschiedenen Hochspannungselektroden vor und hinter der Platte wird eine ausreichende, wohltuend empfundene negative Ionisierung der Luft erzielt, wobei diese Elektrodenanordnung überraschenderweise ozonarm arbeitet.

Zweckmäßige Ausgestaltungen und Weiterbildungen der Erfindung sind in den Unteransprüchen gekennzeichnet.

Ein bevorzugtes Ausführungsbeispiel der Erfindung wird nachfolgend unter Bezugnahme auf die Zeichnung näher erläutert. In dieser zeigt:

Figur 1 .  einen schematischen Querschnitt durch den
       Luftbefeuchter;

Figur 2   einen Schnitt II-II gemäß Figur 1;

Figur 3   einen Schnitt III-III gemäß Figur 1;

Figur 4   eine Ansicht IV-IV gemäß Figur 3 und

Figur 5   eine Ansicht V-V gemäß Figur 3.

In dem Luftbefeuchter befindet sich in einer Wanne Wasser
1. Über der Wanne ist ein Gebläse 2 angeordnet, was als
Radiallüfter ausgebildet ist. In Strömungsrichtung des
Luftstroms hinter dem Gebläse 2 ist eine Platte 3 mit
einem luftdurchlässigen sowie feuchtigkeitsabgebenden
Medium, vorzugsweise einem porösen Schwamm angeordnet,
die langsam gedreht wird und mit ihrem unteren Bereich
in das Wasser 1 eintaucht.

In Strömungsrichtung hinter der Platte 3 ist eine elektrostatisch negativ aufgeladene hintere Hochspannungselektrode 4 und vor der Platte 3 eine vordere, ebenfalls elektrostatisch negativ aufgeladene vordere Hochspannungselektrode 5 angeordnet. Die beiden Elektroden sind, wie
schematisch gezeigt, an den Hochspannungsgenerator 20 angeschlossen, der eine negative Spannung von 4 bis 10, vorzugsweise 6 kV aufweist.

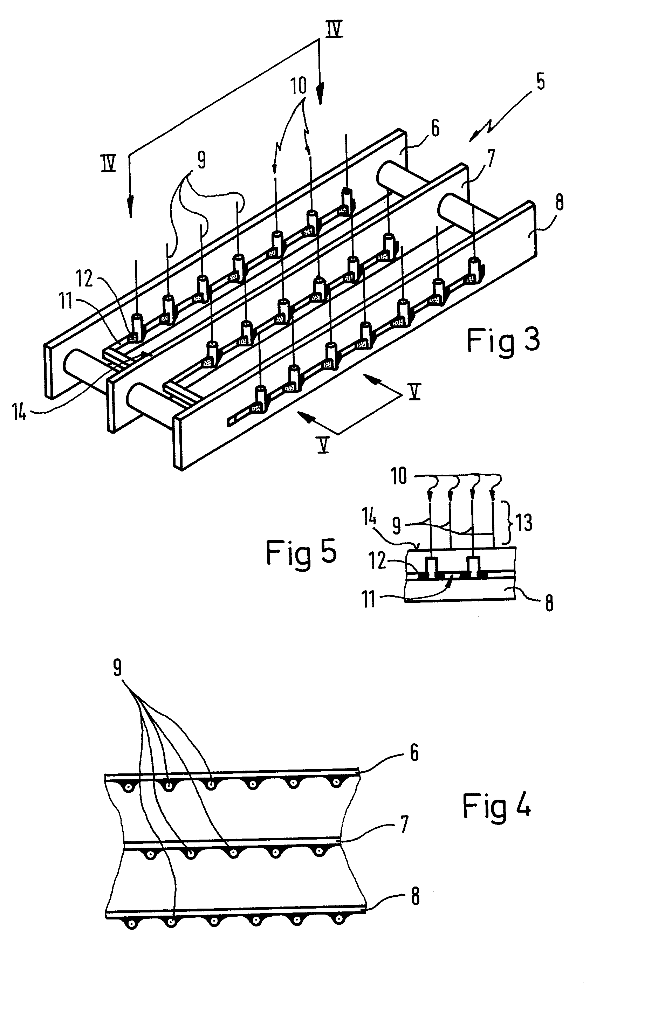

Die hintere Elektrode 4 weist, wie Figur 2 zeigt, eine
Vielzahl von zueinander parallel und senkrecht zum Luftstrom verlaufende Drähte 21 als Einzelelektroden auf.
Die Drähte 21 sind zwischen zwei Halteteilen 22 in an
sich bekannter Weise elektrisch isoliert festgelegt und
gehaltert.

Die insgesamt mit 5 bezeichnete vordere elektrostatische Hochspannungselektrode weist in drei Reihen 6, 7, 8, die parallel zueinander verlaufen und als Printplatten ausgebildet sind, je eine Reihe zueinander parallel verlaufende Einzelelektroden 9 mit einer sehr scharfen Spitze 10 auf. Diese liegen alle in einer Ebene, die senkrecht zur Längserstreckung der Einzelelektroden 9 verläuft. Hierbei stehen den Elektroden 9 in der einen Reihe 6 die Zwischenräume zwischen den Elektroden der benachbarten Reihe 7 - und umgekehrt - gegenüber. Die Printplatten 6, 7, 8 weisen eine schematisch mit 11 bezeichnete gedruckte Schaltung mit Lötpunkten 12 für die Einzelelektroden 9 auf, an denen diese festgelegt sind. Alle Elektroden einer Reihe und die Reihen untereinander sind an eine - nicht gezeigte - negative Hochspannungsquelle angeschlossen.

Die freie Länge 13 der Einzelelektrode 9 (Figur 5) die sich über die Printplatte 8 erstreckt, fällt sich zum Durchmesser der Einzelelektroden mindestens wie 50 : 1. Ferner sind die Einzelelektroden 9 mindestens im Abstand ihrer halben Länge, vorzugsweise 2 Dritteln davon voneinander beabstandet angeordnet, wie schematisch in Figur 2 ersichtlich, die die senkrecht über die Längsseiten 13 der insgesamt rechteckförmigen Platten 6, 7, 8 und zwar senkrecht über der Langseite 13 hervorstehen.

0206171

Eltex-Elektrostatik GmbH                    12.753/Sä/hi

---

LUFTBEFEUCHTER

---

A N S P R Ü C H E
===================

1. Luftbefeuchter mit einem Gebläse (2), dessen von ihm erzeugter Luftstrom durch eine Platte (3) mit einem luftdurchlässigen und feuchtigkeitsabgebendem Medium zwecks Luftbefeuchtung hindurchgeblasen wird, d a d u r c h   g e k e n n z e i c h n e t,  daß vor und hinter der Platte (3) je eine elektrostatisch negativ aufgeladene Hochspannungselektrode (4,5) angeordnet ist.

2. Luftbefeuchter nach Anspruch 1, d a d u r c h g e k e n n z e i c h n e t,  daß jede Hochspannungselektrode (3, 4) mit einer negativen Spannung von 4 bis 10, vorzugsweise 6 kV betrieben wird.

3. Luftbefeuchter nach Anspruch 1 oder 2, d a d u r c h g e k e n n z e i c h n e t,  daß die beiden Hochspannungselektroden verschieden ausgebildet sind.

4. Luftbefeuchter nach einem der Ansprüche 1 bis 3, d a d u r c h   g e k e n n z e i c h n e t,  daß die in Richtung des Luftstroms hintere Hochspannungselektrode (4) eine Vielzahl von zueinander parallel und senkrecht zum Luftstrom verlaufende Drähte (21) als Einzelelektroden aufweist.

5. Luftbefeuchter nach einem der Ansprüche 1 bis 3,
d a d u r c h   g e k e n n z e i c h n e t, daß
die vordere Hochspannungselektrode (5) eine Vielzahl
von nadelförmig ausgebildeten Einzelelektroden (9)
mit je einer Spitze (10) aufweist.

6. Luftbefeuchter nach einem der Ansprüche 1 bis 5,
d a d u r c h   g e k e n n z e i c h n e t, daß
alle nichtvergossenen Einzelelektroden (9) gleich
ausgebildet sowie parallel zueinander verlaufen und
deren Spitzen (10) in einer Ebene liegen, daß ihre
freie Länge (13) sich zu ihrem Durchmesser mindestens
wie 50 : 1 verhält, daß mehrere gleich ausgebildete
Reihen (6, 7, 8) mit Einzelelektroden (9) vorgesehen
sind, wobei den Einzelelektroden der einen Reihe die
Zwischenräume zwischen den Einzelelektroden der benachbarten Reihe gegenüberliegen und daß die Einzelelektroden (9) mindestens voneinander den Abstand
ihrer halben freien Länge (13) aufweisen.

7. Elektrode     nach Anspruch 6,   d a d u r c h
g e k e n n z e i c h n e t,   daß das Verhältnis
Länge zu Durchmesser der Einzelelektroden (9) im Bereich 80 bis 120 liegt.

8. Elektrode nach Anspruch 7,   d a d u r c h   g e -
k e n n z e i c h n e t,   daß die Einzelelektroden
(9) mindestens voneinander den Abstand von 2 Dritteln
in der Länge aufweisen.

9. Elektrode nach einem der Ansprüche 6 bis 8,   d a -
d u r c h   g e k e n n z e i c h n e t,   daß die
Einzelelektroden (9) einer Reihe (6, 7, 8) an einer
Platte aus elektrischem Isoliermaterial mit schmaler
Rechteckform angebracht sind und senkrecht über die

0206171

Langseite (14) der Platte (8) mit ihrer freien Länge (13) vorstehen.

10. Elektrode nach Anspruch 9, d a d u r c h  g e - k e n n z e i c h n e t, daß die Platte eine Printplatte ist und die Einzelelektroden (9) an Lötpunkten (12) angelötet sind.

11. Elektrode nach Anspruch 10, d a d u r c h  g e - k e n n z e i c h n e t, daß die Lötpunkte (12) miteinander über einen gedruckten Leiter (11) miteinander verbunden sind.

12. Elektrode nach einem der Ansprüche 6 bis 11, d a - d u r c h  g e k e n n z e i c h n e t, daß die Einzelelektroden (9) an eine negative Hochspannungsquelle (20) angeschlossen sind.

13. Elektrode nach Anspruch 6, d a d u r c h  g e - k e n n z e i c h n e t, daß die Ebene senkrecht zur Erstreckung der Einzelelektroden (9) verläuft.

14. Elektrode nach einem der Ansprüche 6 bis 13, d a - d u r c h  g e k e n n z e i c h n e t, daß die Spitzen (10) bezüglich der Strömungsrichtung der Luftstroms am hinteren Ende angeordnet sind, also in Strömungsrichtung zeigen.

II

4   3   5

21

2

9

1

**Fig 1**

II

20

21

4

22   22

21

**Fig 2**

Fig 3

Fig 5

Fig 4